Europäisches Patentamt

European Patent Office

Office européen des brevets

(19)

(11) Numéro de publication: **0 224 806**
**B1**

(12) **FASCICULE DE BREVET EUROPEEN**

(45) Date de publication du fascicule du brevet:
14.06.89

(21) Numéro de dépôt: 86116092.7

(22) Date de dépôt: 20.11.86

(51) Int. Cl.⁴: **C 03 B 37/14,** C 03 B 37/16,
G 02 B 6/36

(54) **Dispositif de préhension d'une fibre optique.**

(30) Priorité: 25.11.85 FR 8517396

(43) Date de publication de la demande:
10.06.87 Bulletin 87/24

(45) Mention de la délivrance du brevet:
14.06.89 Bulletin 89/24

(84) Etats contractants désignés:
CH DE FR GB IT LI NL SE

(56) Documents cités:
US-A- 4 274 707
US-A- 4 276 113

(73) Titulaire: COMPAGNIE LYONNAISE DE
TRANSMISSIONS OPTIQUES Société anonyme dite:,
170, Quai de Clichy, F-92111 Clichy (FR)

(72) Inventeur: Varin, Jacques, 2, rue Ambroise Paré,
F-92700 Colombes (FR)
Inventeur: Le Pivert, Hervé, 2bis, rue de Varize,
F-75016 Paris (FR)
Inventeur: Normand, Gérard, Boussières,
F-25320 Montferrand Le Château (FR)

(74) Mandataire: Weinmiller, Jürgen et al,
Lennéstrasse 9 Postfach 24, D-8133 Feldafing (DE)

### Description

La présente invention concerne un dispositif de préhension d'une fibre optique comprenant un corps muni d'un sillon rectiligne de section droite en forme d'un V pour le logement d'une fibre optique en contact par deux génératrices avec les lèvres du sillon, un mors de serrage venant s'appuyer sur une génératrice de la fibre optique opposée à celle engagée le plus profondément dans le sillon rectiligne du corps, des moyens d'ouverture et des moyens de verrouillage (voir US-A-4 276 113).

Le document US-A-4 276 113 décrit une pince de maintien de deux fibres optiques en face et dans l'alignement l'une de l'autre en vue de leur soudage, formée d'un corps et d'un mors de serrage, tous deux rainurés, le mors de serrage étant mobile en rotation autour d'un axe commun avec le corps, des moyens d'ouverture et des moyens de verrouillage, par exemple par ressort. Un tel dispositif est très encombrant, et ne permet guère le transfert d'une fibre optique d'un poste de travail à un autre. En outre, il n'existe dans ce dispositif aucun moyen pour doser et contrôler l'effort appliqué transversalement à la fibre.

La présente invention a pour but de procurer un dispositif de préhension d'une fibre optique qui soit de très faibles dimensions, qui permette de transférer aisément la fibre d'un poste de travail (tel que dénudage, coupe, soudure ou collage, reconstitution de revêtement, essai de traction) à un autre, et dans lequel l'effort de serrage appliqué à la fibre puisse être aisément contrôlé et reproduit. Elle a encore pour but de procurer un dispositif de préhension de grande précision, qui assure une reproductibilité du positionnement de la fibre optique à chaque poste de travail sans nécessiter de réglages minutieux.

Le dispositif de préhension du type cité ci-dessus est, selon l'invention, caractérisé en ce que le corps comporte une surface plane dans laquelle sont creusés le sillon rectiligne de section droite en forme d'un V dans lequel la fibre optique peut être allongée, et dont la profondeur est telle qu'une partie de la section droite de la fibre optique est maintenue au-dessus du sillon, et un deuxième sillon en forme de V, parallèle au premier sillon, ledit deuxième sillon étant en contact avec une tige cylindrique matérialisant un axe de rotation selon deux de ses génératrices, en ce que le mors de serrage comporte une surface plane disposée en regard de la surface plane du corps, et creusée d'un sillon en forme de V reposant sur ladite tige cylindrique matérialisant ledit axe de rotation par deux de ses génératrices, en regard du deuxième sillon rectiligne du corps, son contact avec la tige cylindrique matérialisant un axe de rotation, de sorte que ce dernier permet un pivotement du mors de serrage par rapport au corps, ladite surface plane du mors s'étendant à partir de son sillon au moins jusqu'au-delà dudit premier sillon du corps et étant susceptible de se déformer élastiquement lorsque ladite surface plane du mors vient appuyer sur une génératrice de ladite fibre optique allongée dans ledit premier sillon rectiligne, en ce que les moyens d'ouverture comportent au moins un ressort tendant à écarter la surface plane du mors de la surface plane du corps en faisant pivoter l'une par rapport à l'autre autour dudit axe de rotation, et en ce que les moyens de verrouillage comportent au moins un levier pouvant occuper au moins une première position dans laquelle la surface plane du mors est suffisamment écartée de la surface plane du corps pour permettre le libre passage de ladite fibre optique, et une deuxième position dans laquelle la surface plane du mors applique sur une génératrice de ladite fibre optique un effort tendant à la serrer dans ledit premier sillon, ledit effort étant contrôlé par la déformation élastique de ladite surface plane du mors.

Il répond en outre de préférence à au moins l'une des caractéristiques suivantes:
— le corps est en un matériau dur tel que le coefficient de dureté Vickers soit supérieur à 100, et le mors de serrage est en un matériau présentant un module d'Young supérieur à 10 000 daN/mm²,
— le mors de serrage est muni d'une fente longitudinale s'étendant transversalement sur une partie seulement de la section droite du mors, telle que ladite surface plane du mors s'étendant au moins jusqu'au-delà dudit premier sillon rectiligne du corps soit susceptible de se déformer élastiquement lorsque ladite surface plane du mors vient appuyer sur une génératrice de ladite fibre optique allongée dans ledit premier sillon du corps.

Il est décrit ci-après, à titre d'exemple et en référence aux figures du dessin annexé, un dispositif de préhension d'une fibre optique selon l'invention.

La figure 1 représente le dispositif partiellement ou en coupe perpendiculairement à son axe longitudinal, en position de serrage de la fibre optique.

La figure 2 représente la partie inférieure du dispositif, en position ouverte.

La figure 3 représente la même partie inférieure du dispositif en position serrée.

La figure 4 représente l'embase en élévation, vue en face de sa surface plane munie du sillon.

La figure 5 représente une coupe de l'embase selon l'axe V-V de la figure 4.

La figure 6 représente le mors de serrage en élévation vu du côté de sa face éloignée de l'embase.

La figure 7 représente une coupe du mors de serrage selon l'axe VII-VII de la figure 6.

La figure 8 représente une coupe du mors de serrage selon l'axe VIII-VIII de la figure 6.

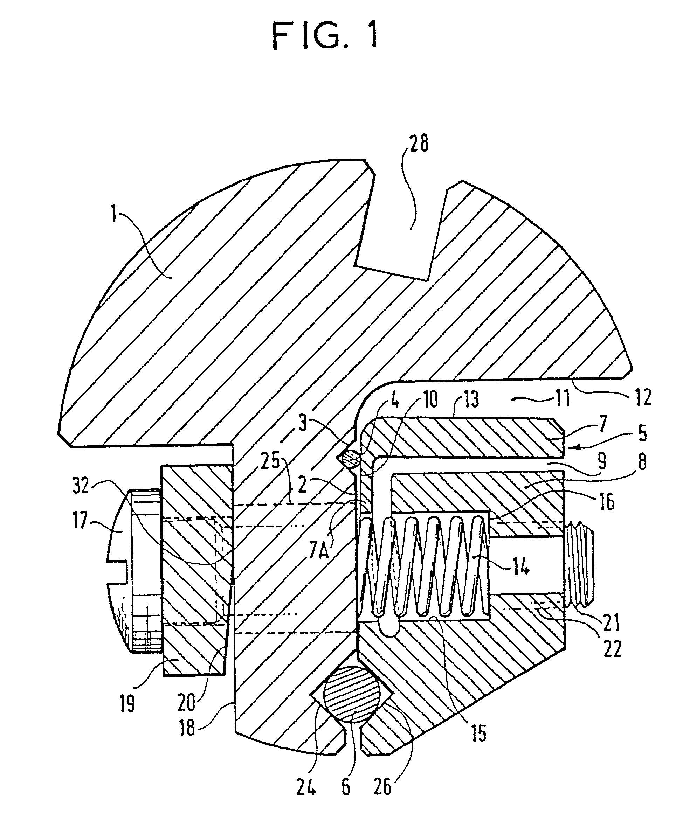

Dans la figure 1, le dispositif de préhension comprend un corps 1 allongé perpendiculairement au plan de la figure, et délimité dans sa partie inférieure par deux surfaces planes parallèles 2 et 18. La face plane 2 est munie d'une rainure en Vé 3 destinée à recevoir la fibre optique 4. Le mors de serrage 5 est articulé sur le corps 1 autour de l'axe 6, engagé dans les sillons 24 du corps et 26 du mors de serrage. Il comprend trois parties, 7 et 7A, plus proches du corps 1, et 8, plus éloignée de celui-ci, séparées par une fente 9, permettant la déformation élastique de la partie 7 du mors de serrage qui contient la surface 10.

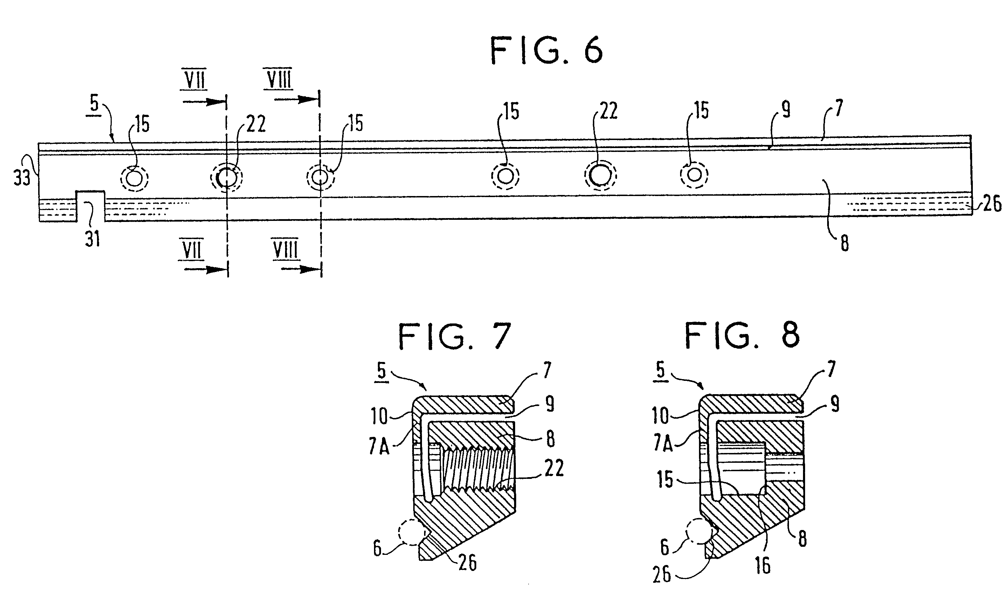

Un ressort hélicoïdal 14 travaillant en compression est disposé dans un alésage 15 du mors de serrage. Enserré entre l'épaulement 16 du mors de serrage et la face plane 2 du corps 1, il tend à écarter le mors de serrage du corps 1 par rotation autour de la tige 6. Comme on le verra en référence à la figure 6, il existe quatre ressorts de ce genre, disposés dans des alésages du mors de serrage échelonnés sur la longueur de celui-ci.

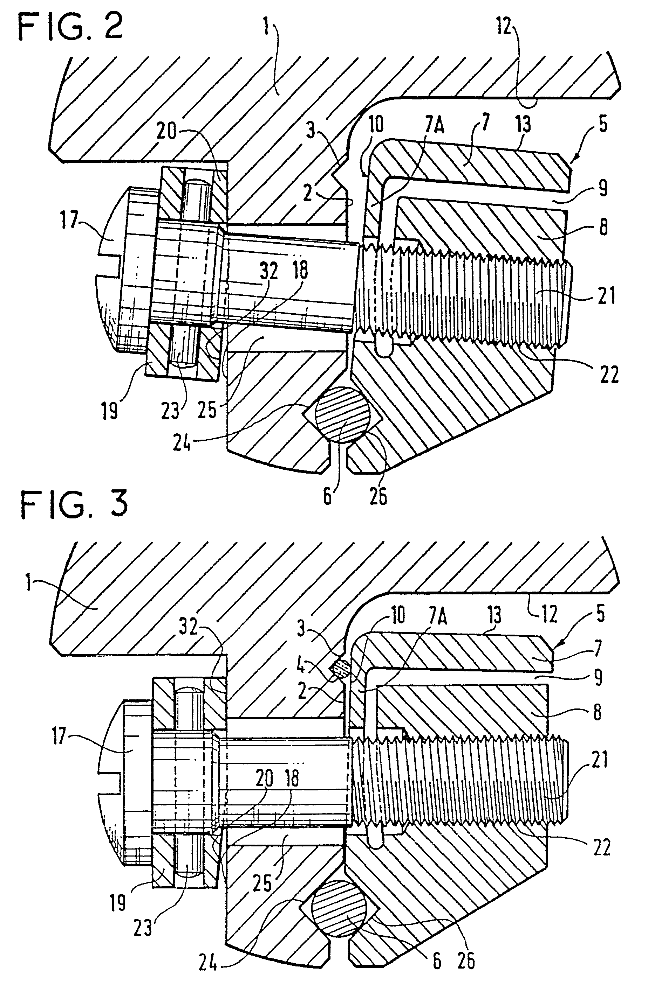

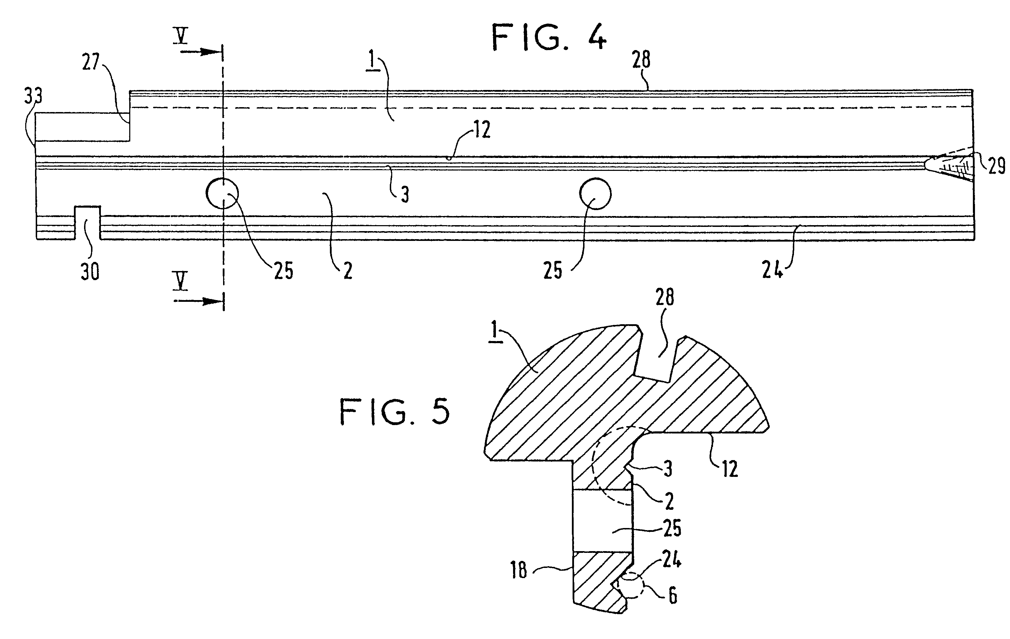

Par ailleurs, une vis 21, disposée hors du plan de coupe de la figure 1 (mais visible sur les figures 2 et 3), munie d'une tête 17, traverse un alésage 25 du corps 1 percé entre la surface 2 et la surface 18 et un alésage correspondant du mors de serrage, dans lequel elle vient engager un alésage taraudé 22. Le diamètre de l'alésage 25 est supérieur au diamètre de la vis 21. Entre la tête 17 de la vis et la surface plane 18 en regard du corps est disposé le levier 19, fixé à la vis 21. Ce levier qui assure le verrouillage du dispositif en position ouverte et en position fermée a la forme d'un cylindre. Il est vu en coupe perpendiculairement à ses génératrices. Il comporte deux surfaces 20 et 32 situées en regard de la surface plane 18 du corps. On verra plus loin en référence aux figures 4 et 6 qu'il existe deux vis et deux leviers agissant en parallèle.

Les figures 2 et 3 représentent selon une coupe partielle perpendiculaire à l'axe longitudinal du dispositif les positions ouverte et fermée obtenues grâce à la manœuvre des leviers 19.

Ces leviers sont percés à une extrémité de deux trous perpendiculaires, l'un pour le passage de la vis 21, l'autre pour le passage de la goupille 23 qui bloque en rotation le levier 19 par rapport à la vis 21. La surface 32 est perpendiculaire à l'axe de la vis 21. La surface 20 est légèrement inclinée par rapport à la surface 32. L'angle aigu formé par ces deux surfaces détermine l'angle balayé par le mors de serrage 5 entre ses deux positions extrêmes ouverte et fermée.

Dans la position ouverte représentée figure 2, la surface 20 du levier porte sur la surface 18 du corps. La vis 21 n'est pas perpendiculaire à la surface plane 2 du corps. Les ressorts 14 (non visibles sur la figure 2) maintiennent le mors de serrage et le corps écartés l'un de l'autre. L'espace entre les faces 12 du corps et 13 du mors de serrage et l'espace entre la face 2 du corps au voisinage du sillon 3 et la face 10 du mors de serrage sont suffisants pour permettre l'introduction dans le sillon 3 ou l'enlèvement hors du sillon 3 de la fibre optique 4 restant étendue selon une direction à peu près parallèle à l'axe du dispositif. Il est aussi possible de faire glisser la fibre le long du sillon 3, en particulier pour introduire la fibre par une extrémité du dispositif. Pour faciliter cette opération, le sillon 3 est évasé en forme de cône 29 représenté sur la figure 4 dans la face du dispositif opposée à la face frontale 33.

Dans la position fermée représentée en figure 3, le levier a été manœuvré en le faisant tourner d'un demi-tour autour de l'axe de la vis 21. La surface 32 perpendiculaire à cet axe est maintenant en contact avec la surface plane 18. La rotation du levier 19 a entraîné la rotation de la vis 21 dont la longueur libre au-dessus de l'alésage taraudé 22 a été réduite d'une longueur égale à un demi-pas de filetage, entraînant le mors de serrage 5 à se rapprocher du corps 1 en pivotant autour de la tige 6. Dans ce mouvement, la surface 10 du mors de serrage est venue s'appliquer sur une génératrice de la fibre 4 et maintenir celle-ci serrée dans le sillon 3, entraînant une déformation élastique de la partie 7A du mors de serrage contenant la surface 10. L'effort exercé sur la fibre est ajusté par l'enfoncement de la vis 21 dans l'alésage taraudé 22. Cet ajustement est réalisé lors de l'assemblage du dispositif et permet de positionner le trou dans la vis 21 qui permet le passage de la goupille 23.

La figure 4 représente le corps de pince vu en élévation. On y voit la face plane 12, le sillon 3 de logement de la fibre optique, le sillon 24 correspondant à l'axe de rotation du mors de serrage vis-à-vis du corps, et les alésages 25 de passage des vis 21. Dans la partie gauche du corps, un épaulement 27, dont la surface est usinée avec une grande précision, permet de former une cote de référence par rapport à la face frontale 33 du dispositif pour le positionnement de ce dispositif et de l'extrémité de la fibre dans chaque poste de travail. Ce corps est de préférence en carbure de tungstène ou en un autre matériau de dureté élevée, résistant aux produits chimiques utilisés dans les traitements de la fibre optique.

La figure 5 représente le corps en coupe par l'axe V-V de la figure 4, dans le plan de symétrie d'un alésage 25 de passage d'une vis de réglage 21.

Le mors de serrage est vu en élévation dans la figure 6, les figures 7 et 8 représentent des coupes selon les axes VII-VII est VIII-VIII de la figure 6, passant respectivement par l'axe d'une vis et l'axe d'un alésage de logement d'un ressort. Il comporte la fente 9 qui permet à la partie 7A du mors contenant la surface 10 de se déformer élastiquement, quatre alésages 15 de logement des ressorts, et deux alésages taraudés 22 de réception des vis 21.

Sur la figure 4 du corps et la figure 6 du mors de serrage les rainures 30 et 31 perpendiculaires à l'axe du dispositif sont destinées à recevoir une rondelle d'épaisseur convenable dans laquelle la tige cylindrique 6 est enfoncée à force. Les déplacements selon l'axe du dispositif du mors de serrage par rapport au corps sont ainsi interdits. Sur les figures 1, 4 et 5 du corps apparaît une rainure 28 à section rectangulaire dans laquelle peut coulisser un pion de centrage ou une glissière, solidaire de chaque poste de travail. Cela permet de fixer l'orientation du dispositif autour de son axe longitudinal et donc de la fibre serrée dans le dispositif. Le mors de serrage est de préférence en un matériau élastique et résistant aux produits chimiques utilisés dans les traitements de la fibre optique, tel que l'alliage inoxydable A P 4 H 15 vendu sous la désignation commerciale «ARCAP» par la Société dite «Comptoir Lyon-Alemand».

Bien qu'il paraisse préférable de constituer le corps du dispositif en un matériau dur, et le mors de serrage en un matériau susceptible de déformations élastiques, on peut également les constituer en un même matériau présentant des caractéristiques de dureté et d'élasticité moyennes, par exemple en une résine synthétique permettant d'en abaisser le prix de revient. Dans ce cas, il est préférable que ce matériau présente un coefficient de dureté Vickers supérieur à 30 et un module d'Young supérieur à 1000 daN/mm².

Le dispositif de préhension qui vient d'être décrit en référence aux figures permet de maintenir une fibre optique de diamètre pouvant varier dans une certaine mesure (par exemple entre 200 et 230 microns), en exerçant sur elle une force de serrage faible et étalonnée. Il est de faibles dimensions, par exemple entièrement contenu dans un cylindre de diamètre de l'ordre de 5 mm et d'une longueur de l'ordre de 50 mm. Après introduction et serrage de la fibre, il peut être transféré d'un poste de travail à un autre, par exemple dans les postes successifs de dénudage de la fibre, de coupe, de soudage, d'enrobage de celle-ci et d'essai de traction, et être maintenu en place sur ces différents postes avec un effort de serrage important, sans dommage pour la fibre et avec une grande précision, du fait du repère de cotes qu'il comporte.

Le nombre de vis 21 et le nombre de ressorts 14, de même que la forme hélicoïdale de ces ressorts, correspondent à une réalisation préférentielle de l'invention représentée par les figures. Toutefois, il doit être entendu que l'on peut changer ces nombres et la forme des ressorts, par exemple utiliser des ressorts en forme d'épingle à cheveux appuyée sur les surfaces 2 et 10, sans sortir du cadre de l'invention.

De même, les dessins montrent que le dispositif décrit est entièrement contenu dans un cylindre de section droite circulaire auquel il est tangent sur une grande partie de sa surface. Cette disposition permet en particulier de maintenir le dispositif dans un système à douille de serrage fendue ou dans un mandrin à trois mors à 120°. Il est clair que d'autres sections droites de ce cylindre mieux adaptées à tel ou tel système de maintien peuvent être utilisées. Par exemple, une section droite trapézoïdale pourrait être avantageuse pour un maintien entre deux mors plans parallèles.

## Revendications

1. Dispositif de préhension d'une fibre optique, comprenant un corps (1) muni d'un sillon rectiligne (3), de section droite en forme de V pour le logement d'une fibre optique (4) en contact par deux génératrices avec les lèvres du sillon, un mors de serrage (5) venant s'appuyer sur une génératrice de la fibre optique opposée à celle engagée le plus profondément dans le sillon rectiligne du corps, des moyens d'ouverture (14) et des moyens de verrouillage (19), caractérisé en ce que
— le corps comporte une surface plane (2) dans laquelle est creusé le sillon rectiligne (3) de section droite en forme de V dans lequel la fibre optique peut être allongée,
— la profondeur du sillon rectiligne est telle qu'une partie de la section droite de la fibre optique est maintenue au-dessus du sillon,

— la surface plane du corps est creusée d'un deuxième sillon rectiligne (24) en forme d'un V, parallèle au premier sillon, ledit deuxième sillon étant en contact avec une tige cylindrique (6) matérialisant un axe de rotation selon deux de ses génératrices,
— le mors de serrage comporte une surface plane (10) disposée en regard de la surface plane du corps, et creusée d'un sillon (26) en forme de V reposant sur ladite tige cylindrique (6) matérialisant ledit axe de rotation par deux de ses génératrices, en regard du deuxième sillon rectiligne du corps, son contact avec ladite tige cylindrique (6) matérialisant un axe de rotation de sorte que ce dernier permette un pivotement du mors de serrage par rapport au corps, ladite surface plane du mors s'étendant à partir de son sillon au moins jusqu'au-delà dudit premier sillon rectiligne (3) du corps et étant susceptible de se déformer élastiquement lorsque ladite surface plane du mors vient appuyer sur une génératrice de ladite fibre optique allongée dans le premier sillon rectiligne (3),
— les moyens d'ouverture (14) comportent au moins un ressort tendant à écarter la surface plane du mors de la surface plane du corps en faisant pivoter l'une par rapport à l'autre autour de l'axe de rotation,
— et les moyens de verrouillage (19) comportent au moins un levier pouvant occuper au moins une première position dans laquelle la surface plane du mors est suffisamment écartée de celle du corps pour permettre le libre passage de la fibre optique, et une deuxième position dans laquelle la surface plane du mors applique sur une génératrice de la fibre optique un effort tendant à la serrer dans ledit premier sillon, cet effort étant contrôlé par la déformation élastique de la surface plane du mors.

2. Dispositif selon la revendication 1, caractérisé en ce que le corps (1) est en un matériau dur de coefficient de dureté Vickers supérieur à 100, et en ce que le mors de serrage (7) est en un matériau présentant un module d'Young supérieur à 10 000 daN/mm².

3. Dispositif selon la revendication 1, caractérisé en ce que le corps et le mors de serrage sont en un même matériau, de coefficient de dureté Vickers supérieur à 30 et de module d'Young supérieur à 1000 daN/mm².

4. Dispositif selon l'une des revendications 1 à 3, caractérisé en ce que le mors de serrage (7) est muni d'une fente longitudinale (9) s'étendant transversalement sur une partie seulement de la section droite du mors, telle que la surface plane (10) du mors s'étendant à partir de son sillon au moins jusqu'au-delà dudit premier sillon (3) du corps soit susceptible de se déformer élastiquement lorsque cette surface plane vient appuyer sur une génératrice de la fibre optique allongée dans le premier sillon du corps.

## Patentansprüche

1. Vorrichtung zum Greifen einer Lichtleitfaser, mit einem Körper (1), der mit einer geradlinigen Rille (3) V-förmigen Querschnitts für die Anordnung einer Lichtleitfaser (4) ausgestattet ist, die über zwei Mantellinien mit den Seiten der Rille in Kontakt steht, mit einer Spannbacke (5), die auf eine Mantellinie der Lichtleitfaser entgegengesetzt zu der drückt, die am tiefsten Grund der geradlinigen Rille des Körpers verläuft, mit Öffnungsmitteln (14) und Verriegelungsmitteln (19), dadurch gekennzeichnet, dass

— der Körper eine ebene Oberfläche (2) aufweist, in die die geradlinige Rille (3) V-förmigen Querschnitts, in die die Lichtleitfaser gelegt werden kann, eingearbeitet ist,

— die Tiefe der geradlinigen Rille so gewählt ist, dass ein Teil des Querschnitts der Lichtleitfaser oberhalb der Rille gehalten wird,

— dass die ebene Oberfläche des Körpers eine zweite V-förmige geradlinige Rille (24) parallel zur ersten Rille aufweist, wobei die zweite Rille mit einem zylindrischen Stab (6) in Verbindung steht, der entlang von zwei seiner Mantellinien eine Rotationsachse bildet,

— die Spannbacke eine ebene Oberfläche (10) aufweist, die der ebenen Oberfläche des Körpers gegenüberliegt und eine V-förmige Rille (26) enthält, die auf dem zylindrischen Stab (6) aufliegt, welcher durch zwei seiner Mantellinien die Rotationsachse bezüglich der zweiten geradlinigen Rille des Körpers bildet, wobei ihr Kontakt mit dem zylindrischen Stab (6) eine Rotationsachse bildet, so dass diese ein Schwenken der Spannbacke in bezug auf den Körper ermöglicht, wobei die ebene Oberfläche der Backe sich ausgehend von ihrer Rille mindestens bis über die erste geradlinige Rille (3) des Körpers hinaus erstreckt und sich elastisch verformen lässt, wenn die ebene Oberfläche der Backe entlang einer Mantellinie auf der in der ersten geradlinigen Rille (3) liegenden Lichtleitfaser aufliegt,

— die Öffnungsmittel (14) mindestens eine Feder aufweisen, die dazu neigt, die ebene Oberfläche der Backe von der ebenen Oberfläche des Körpers zu entfernen, indem sie die eine in bezug auf die andere um die Rotationsachse schwenken lässt,

— und die Verriegelungsmittel (19) mindestens einen Hebel aufweisen, der mindestens eine erste Position einnehmen kann, in der die ebene Oberfläche der Backe weit genug von der des Körpers entfernt ist, um den freien Durchgang der Lichtleitfaser zu ermöglichen, und eine zweite Position, in der die ebene Oberfläche der Backe entlang einer Mantellinie der Lichtleitfaser eine Kraft auf diese ausübt, durch die sie in der ersten Rille festgehalten wird, wobei diese Kraft durch die elastische Verformung der ebenen Oberfläche der Backe gesteuert wird.

2. Vorrichtung nach Anspruch 1, dadurch gekennzeichnet, dass der Körper (1) aus einem harten Material mit einem Vickers-Härtekoeffizient grösser als 100 ist, und dass die Spannbacke (7) aus einem Material besteht, das einen Young-Modul grösser als 10 000 daN/mm² aufweist.

3. Vorrichtung nach Anspruch 1, dadurch gekennzeichnet, dass der Körper und die Spannbacke aus demselben Material mit einem Vickers-Härtekoeffizienten grösser als 30 und einem Young-Modul grösser als 1000 daN/mm² bestehen.

4. Vorrichtung nach einem der Ansprüche 1 bis 3, dadurch gekennzeichnet, dass die Spannbacke (7) einen Längsschlitz (9) aufweist, der sich quer nur über einen Teil des Querschnitts der Backe erstreckt, so dass die ebene Oberfläche (10) der Backe, die sich ausgehend von ihrer Rille mindestens über die erste Rille (3) des Körpers hinaus erstreckt, sich elastisch verformen kann, wenn diese ebene Oberfläche entlang einer Mantellinie der in der ersten Rille des Körpers liegenden Lichtleitfaser auf diese drückt.

## Claims

1. A device for gripping an optical fibre, comprising a body (1) provided with a rectilinear groove (3) of V-shaped cross-section for housing an optical fibre (4) which is in contact with the sides of the groove along two generating lines, a chuck jaw (5) brought to bear on the optical fibre along a generating line opposite to the generating line which is engaged to the greatest depth in the rectilinear V-groove of the body, opening means (14) and locking means (19), characterized in that

— the body has a flat surface (2) in which is cut the rectilinear groove (3) having a V-shaped cross-section, in which the optical fibre can be laid,

— the depth of the rectilinear groove is such that part of the cross-section of the optical fibre is located above the groove,

— a second V-shaped groove (24) is cut into the flat surface of the body, which groove is parallel to the first groove and is in contact with a cylindrical rod (6) which defines an axis of rotation along two of its generating lines,

— the chuck jaw has a flat surface (10) located facing the flat surface of the body and having a V-shaped groove (26) supported by said cylindrical rod (6) having two generating lines which define said axis of rotation located facing the second rectilinear groove of the body, its contact with said cylindrical rod (6) defining an axis of rotation, so that the latter permits a pivotal movement of the chuck jaw with respect to the body, said flat surface of the chuck jaw extending from its groove at least to a point beyond said first rectilinear groove (3) of the body and being capable of elastic deformation when said flat surface of the jaw bears on a generating line of said optical fibre which has been laid in said first rectilinear groove (3),

— the opening means (14) comprise at least one spring which tends to move the flat surface of the chuck jaw away from the flat surface of the body by causing pivotal displacement of one surface with respect to the other about the axis of rotation,

— and the locking means (19) comprise at least one lever which is capable of occupying at least a first position in which the flat surface of the chuck jaw is sufficiently far away from the flat surface of the body to permit free passage of said optical fibre, and a second position in which the flat surface of the chuck jaw applies on a generating line of said optical fibre a force which tends to press said fibre in said first groove, said force being controlled by the elastic deformation of said flat surface of the jaw.

2. A device according to claim 1, characterized in that the body (1) is of high-hardness material such as to have a Vickers hardness number higher than 100, and the chuck jaw (7) is of a material having a Young's modulus higher than 10 000 daN/mm².

3. A device according to claim 1, characterized in that the body and the chuck jaw are of the same material having a Vickers hardness number higher than 30 and a Young's modulus higher than 1000 daN/mm².

4. A device according to one of claims 1 to 3, characterized in that the chuck jaw (7) is provided with a longitudinal gap (9) which extends transversely over only part of the cross-section of the chuck jaw so that the flat surface (10) of the jaw which extends at least to a point beyond said first groove (3) of the body is capable of undergoing elastic deformation when said flat surface of the jaw is brought to bear on a generating line of said optical fibre which has been laid in said first groove of the body.

# FIG. 1

FIG. 2

FIG. 3

# FIG. 4

# FIG. 5

EP 0 224 806 B1

**FIG. 6**

**FIG. 7**

**FIG. 8**